# EUROPEAN PATENT APPLICATION

(11) **EP 4 660 571 A1**
(43) Date of publication of application: **10.12.2025**
(21) Application number: 24770400.0
(22) Date of filing: 19.02.2024
(51) Int. Cl.: G01B 5/20

(54) **MEASURING FORCE ADJUSTMENT MECHANISM AND MEASURING DEVICE EQUIPPED WITH SAME**

(30) Priority: 16.03.2023 JP 2023041726
(71) Applicant: Tokyo Seimitsu Co., Ltd., Hachioji-shi, Tokyo 192-8515 (JP)
(72) Inventor: SUZUKI, Shinya, Tsuchiura-shi, Ibaraki 300-0015 (JP)
(74) Representative: Seemann & Partner Patentanwälte mbB
(86) International application number: PCT/JP2024/005677
(87) International publication number: WO 2024/190285

(57) **Abstract**

A measuring force adjustment mechanism 300 provided in a measuring device includes: a tension spring 146; an upper spring locking tool 160 that locks one end of the spring; and a lower spring locking tool 312 that locks the opposite end of the spring. According to the measuring force adjustment mechanism 300, in which the upper spring locking tool includes a threaded portion 160a on an opposite end to the side where the spring is locked, a cap nut 320 includes a thread that engages with this threaded portion, the opposite end side to the thread-formed portion of the cap nut being exposed to the outside of the measuring device, a tool locking portion 322 into which a tool can be fitted is provided on the exposed portion of the cap nut, a sealed groove 334 is formed on the side surface of the cap nut, and a rotation restriction means 160e that is movable in a vertical direction without rotating around its own axis even though the cap nut rotates is formed on the upper spring locking tool, it is possible to achieve the measuring force adjustment mechanism that can be adjusted from the outside, with being compact and without generating excess torque on the spring, in the measuring device.

## Description

### Field

The present invention relates to a measuring force adjustment mechanism that adjusts the measuring force of a measuring element to be brought into contact with a workpiece and a measuring device equipped with the measuring force adjustment mechanism, and particularly to a measuring force adjustment mechanism suitable in a case where a pneumatic cylinder is used to bring a measuring element into contact with a workpiece and a measuring device equipped with the measuring force adjustment mechanism.

### Background

A dimensional measuring device with a pneumatic cylinder is often used to electrically measure and dimensionally check the outer diameter and the like of a shaft member. For example, the use of a gauge head or a measuring head to check the length dimension of a machine part is described in Patent Literature 1. The measuring head includes a support structural material with a casing that defines a groove and a longitudinal geometric axis, an arm-set movable with respect to the support structural material with an arm and a feeler, a fulcrum disposed between the arm and the support structural material, and enabling a movement of the arm with respect to the support structural material about a transversal axis, and a thrust device disposed between the arm and the support structural material and biasing the feeler towards a surface of a machine part to be inspected, and a transducer coupled to the arm and the support structural material and providing signal depending on a position of the arm with respect to the support structural material. Accordingly, the measuring head ensures a high-level repeatability accuracy.

Patent Literature 2 discloses that a measuring head is equipped with a shape memory alloy actuator as a retract mechanism in order to retract an arm of the measuring head with a simple structure. The shape memory alloy actuator includes a coil spring and a bias spring made of a shape memory alloy, and the like. The coil spring and the bias spring are inserted from both end portions of a rod toward a flange fixed in the middle of the rod, and then held in a holder with the bias spring contracted. In a case where the coil spring is energized and heated to a temperature equal to or higher than its transformation temperature, the coil spring deforms, the rod pushes down a push-down plate, and the contact is retracted.

Furthermore, in Patent Literature 3, in order to minimize condensation from occurring in a pneumatic cylinder, the pneumatic cylinder is equipped with a cylinder and a piston that divides the inside of the cylinder into a first chamber and a second chamber. Condensation means is further provided on the inner surface of the piston or cylinder for unidirectional communication between the first and second chambers.

### Citation List

### Patent Literature

Patent Literature 1: Japanese Patent Application Laid-open No. 2011-64694
Patent Literature 2: Japanese Patent Application Laid-open No. 2001-27503
Patent Literature 3: Japanese Patent Application Laid-open No. 2020-112212

### Summary

### Technical Problem

For example, in a dimensional measuring device (measuring head) using a pneumatic cylinder, the measuring force applied to an object to be measured, which is a measurement target, is varied according to a material, surface treatment, size, and other properties of the object to be measured to achieve highly accurate dimensional measurement. Therefore, it is desirable that a measuring pressure adjustment mechanism that applies measuring pressure is provided in a dimensional measuring head, thereby enabling adjustment of the measuring pressure adjustment mechanism externally while the dimensional measuring head is actually brought into contact with or close to the object to be measured. As it is a dimensional measuring device, the entire device, including a contact portion that is brought into directly contact with the object to be measured, is required to be compact for ease of measurement. Most commercially available measuring heads have a main part with each side set at a size equal to or less than 100 mm.

The head for dimensional inspection described in Patent Literature 1 described above has the thrust device as a device that adjusts the measuring force. The thrust device has first and second hooking elements arranged vertically and a spring provided to be arranged between these elements in order to press the contact against the surface of the machine part to be inspected. Both ends of the spring are held in through-holes formed in the hooking elements. The lower hooking element has a hollow screw (guide neck) that holds the lower end of the spring with the upper end portion thereof and an adjusting screw with a male thread that is in threaded engagement with this hollow screw. The hollow screw has a square cross section to prevent axial rotation of the second hooking element. Rotating the head of the adjusting screw from outside the casing causes the second hooking element to move in a vertical direction, so that the bias on the spring changes to change the measuring force applied to the arm.

The head for inspection described in Patent Literature 1 is highly practical because it is designed to prevent rotation of the spring, to include a seal to minimize leakage of a fluid, such as silicone oil with which the inside of the head for inspection is filled, from the head for inspection to the outside, and to enable external adjustment of the spring force; however, satisfying all of these requirements results in a more complex structure, and the space available for the spring is reduced, limiting the spring force that can be provided. In addition, the sealing portion and the spring force adjustment position are inevitably located close to each other, and miniaturization is not always easy.

In the measuring head described in Patent Literature 2, an L-shaped protruding portion is formed on an arm 16, and the protruding portion is supported by a head body via a spring. The biasing force of the spring pulls the protruding portion upward, and the contact moves in the measurement direction with a cross-shaped spring as a fulcrum via the arm for measurement. As a result, the pressure for measurement is applied to the contact by the biasing force of the spring.

Since the measuring head described in Patent Literature 2 has a structure in which an end portion of the spring for adjusting the pressure for measurement is hooked to a screw, rotating the screw to adjust the spring force causes the spring to rotate together with the screw. In a case where the spring is rotated, torsional torque is generated at the end where the spring is attached to the lever. In a case where the lever is rotated until the pivoting direction of the lever and the direction of the hook on the end portion of the spring that is hooked to the lever coincide with each other, the spring may be damaged in long-term use due to an increase in stress on the hook, and even though the spring is not damaged, an excessive pressure for measurement may be applied to the contact.

In Patent Literature 3, a tension spring is arranged inside a case, on the opposite-to-measuring-element side and farther away from the shaft holder, one end of the tension spring is locked by a support shaft protruding inside the case, and the other end of the tension spring is locked by a locking tool provided at the middle portion along the longitudinal direction of the shaft. Accordingly, the tension spring acts to pull the shaft in that position, thereby causing the shaft to pivot around a pivot shaft and then push an arm 234 downward. As a result, the measuring force is added. Since this tension spring has the same configuration as the one described in Patent Literature 2, adjusting the locking tool to adjust the tension spring causes the tension spring to rotate together with the locking tool, thereby generating an excess torsional torque on the tension spring.

The present invention has been made in view of the above-described problems of the related art, and an objective of the present invention is to achieve an externally adjustable measuring force adjustment mechanism that is compact and does not generate excess torque on the spring. Another objective of the present invention is to achieve an externally adjustable measuring force adjustment mechanism with a compact and simple configuration while preventing leakage of a damping fluid such as silicone oil with which the inside of a measuring head is filled to the outside. Then, the present invention is to achieve at least one of these objectives.

### Solution to Problem

The features of the present invention for achieving the above objectives are as follows
[1] A measuring force adjustment mechanism included in a measuring device with which a fluid is filled and sealed, the measuring force adjustment mechanism including: a spring; an upper spring locking tool that locks one end of the spring; and a lower spring locking tool that locks an opposite end of the spring, in which a thread is formed on an opposite end to a side of the upper spring locking tool where the spring is locked, a cap nut that includes a threaded portion on which a thread is formed to engage with the thread is provided, an opposite end side to the threaded portion of the cap nut being exposed to an outside of the measuring device, the cap nut includes a tool locking portion where the exposed portion is capable of engaging with a tool and includes a sealed groove on a side surface of the cap nut, and a rotation restriction means is formed in the upper spring locking tool, the rotation restriction means being configured to be movable in a vertical direction without rotating around its own axis even though the cap nut rotates.
[2] The measuring force adjustment mechanism according to [1], in which the tool locking portion is a bolt head or a driver groove formed on an upper outer surface of the cap nut.
[3] The measuring force adjustment mechanism according to [2], in which the upper spring locking tool includes, from top to bottom in an axial direction, the threaded portion and a small diameter portion, and a hole is formed at a height position where the thread of the cap nut is formed, and at a position radially away from the axis of the cap nut by a distance equal to or greater than an axial radius of the small diameter portion of the upper spring locking tool and shorter than an outer radius of the threaded portion of the upper spring locking tool, the hole extending in a direction substantially perpendicular to the axial direction, through which a pin is capable of being inserted.
[4] The measuring force adjustment mechanism according to [1], in which the upper spring locking tool includes a trimmed surface having a cross section perpendicular to the axis, with part of a circle cut off, and the trimmed surface constitutes the rotation restriction means.
[5] The measuring force adjustment mechanism according to [1], in which the lower spring locking tool includes a spring locking portion that is a flat portion having a rectangular cross section and has a base including a groove into which the flat portion is fitted.
[6] A measuring device including: an arm that has one end to which a measuring element attached; a lever that is coupled to the arm; a sealed case that houses the lever liquid-tightly; a retract mechanism that is disposed in the sealed case; a measuring force adjustment mechanism that is arranged adjacent to the retract mechanism and in the sealed case; and an actuating transformer that is arranged in the sealed case and arranged on an opposite side of the measuring force adjustment mechanism with respect to the retract mechanism, in which the measuring device measures an object to be measured, serving as a workpiece, by bring the measuring element into contact with the object to be measured, the measuring force adjustment mechanism includes a tension spring, an upper spring locking tool and a lower spring locking tool that lock both ends of the tension spring, respectively, and a cap nut that is positioned on an upper portion of the upper spring locking tool and has a thread formed therein, the upper spring locking tool includes, on an opposite end to the end where the tension spring is locked, a thread engaging with the thread formed on the cap nut, the cap nut includes a portion that is exposed to an outside of the measuring device on an opposite end side to an opening end at which the thread is formed, the exposed portion of the cap nut including a tool locking portion with which a tool is capable of being engaged, and a sealed groove is formed on a side surface of the cap nut, and the upper spring locking tool is, in cooperation with an outer surface of the retract mechanism, movable in a vertical direction without rotating around its own axis even though the cap nut rotates.
[7] The measuring device according to [6], in which the upper spring locking tool includes, from top to bottom in an axial direction, a threaded portion, a small diameter portion, and a spring locking portion, and a hole, through which a pin is capable of being inserted, is formed in the cap nut to extend in a direction perpendicular to the axial direction, a position of the hole in the axial direction being in a threaded portion formed in the cap nut, and a position of the hole in a radial direction being a position away from an axial center of the cap nut by a distance equal to or greater than an axial radius of the small diameter portion of the upper spring locking tool and shorter than an outer radius of the threaded portion of the upper spring locking tool.

### Advantageous Effects of Invention

According to the present invention, since the configuration in which the upper locking tool that locks one end of the tension spring is provided with an anti-rotation function and a thread that engages with the cap nut is adopted, and the structure in which the outer peripheral surface of the cap nut that engages with this thread is sealed and the upper surface of the cap nut is exposed to the outside is adopted, excess torque is not generated on the spring while achieving a compact size. In addition, it is possible to achieve the externally adjustable measuring force adjustment mechanism with a compact and simple configuration while preventing leakage of a damping fluid such as silicone oil with which the inside of the measuring head is filled to the outside.

### Brief Description of Drawings

FIG. 1 is a diagram illustrating an example of the use of a measuring device equipped with a measuring force adjustment mechanism according to the present invention.
FIG. 2 is a schematic longitudinal cross-sectional view of an embodiment of the measuring device.
FIG. 3 illustrates a longitudinal cross-sectional view of the measuring force adjustment mechanism included in the measuring device illustrated in FIG. 2, and illustrates a sectional view taken along line A-A, a sectional view taken along line B-B, a sectional view taken along line C-C, a view in the direction of arrow D, and a sectional view taken along line E-E of the measuring force adjustment mechanism.
FIG. 4 is a perspective view illustrating a surrounding area of a spring included in the measuring force adjustment mechanism illustrated in FIG. 2.
FIG. 5 is a longitudinal cross-sectional view of a cap nut included in the measuring device illustrated in FIG. 2 ((a) of FIG. 2) and a front view of an upper spring locking tool ((b) of FIG. 2).

### Description of Embodiments

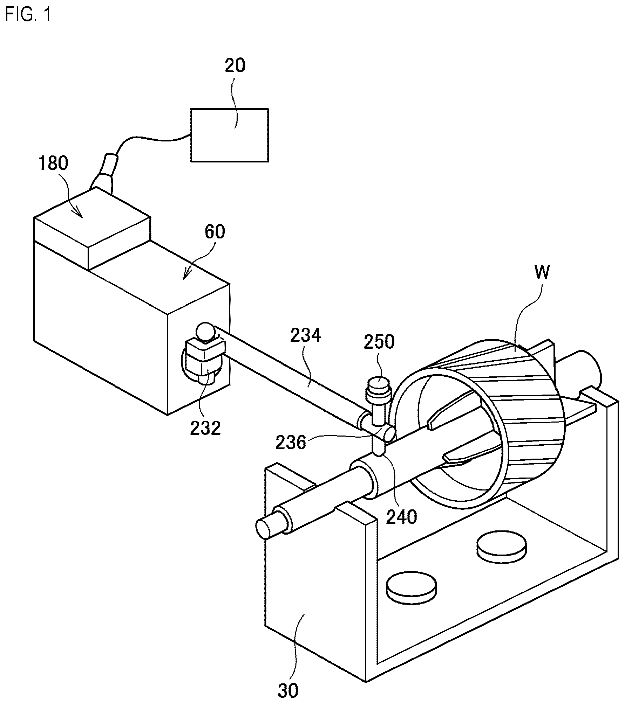

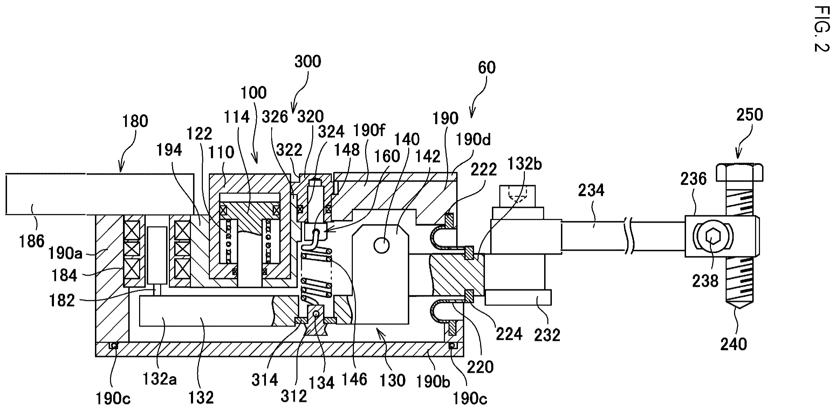

Hereinafter, an embodiment of the present invention will be described with reference to the drawings. FIG. 1 is a schematic perspective view illustrating a state of measuring runout of an outer diameter of a commutator as a workpiece W using a measuring device 60 according to the present invention. For the measurement by the measuring device 60, a general-purpose measuring head (a measuring element 250), a control processing device 20, an air source (not illustrated), and the like are used. A retract mechanism is provided in the measuring device 60 to separate the measuring element 250 away from the workpiece W before or after measurement. The measuring device 60 also includes a measuring force adjustment mechanism 300 (see FIG. 2) to apply an appropriate measuring force to the workpiece W.

With the measuring force adjusted by the measuring force adjustment mechanism 300 and the spring force of the retract mechanism, the runout of a commutator shaft is measured by bringing the measuring element 250 into contact with the workpiece W placed on a measuring table 30 with an appropriate measuring force. The obtained result is processed by the control processing device 20 as the output of an actuating transformer 180.

The measuring device 60 is illustrated in detail in a longitudinal cross-sectional view in FIG. 2. The measuring device 60 includes a case member 190 that has a substantially rectangular parallelepiped shape and houses a retract mechanism 100 and the actuating transformer 180. The case member 190 includes a case member main body 190f in which a space for housing the retract mechanism 100 via a retract mechanism holding member 194 and a space for housing the actuating transformer 180 are formed, a side member 190a disposed on the side where the actuating transformer 180 is housed, a lid member 190d that substantially covers the upper surface of the case member main body 190f, and a bottom plate 190b that covers the lower surface of the case member main body 190f via a sealing member 190c. The case member 190 of the measuring device 60 is filled with a fluid such as silicone oil and sealed to absorb the impact generated when the measuring element 250 is brought into contact with the workpiece W. Therefore, the case member 190, together with the retract mechanism holding member 194 and other components, constitutes a sealed (liquid-tight) container as a whole.

A lever shaft 132 that is coupled to the measuring element 250 via the arm 234 extends laterally from the case member 190 (from the right side surface of the case member 190 toward the right side, in FIG. 2). A bellows 220 is arranged between the case member 190 and the lever shaft 132 to allow precession of the lever shaft 132, and the bellows 220 is provided with locking portions 222 and 224 at both end portions, respectively. Within the case member 190, a pivot shaft 140 is disposed substantially perpendicular to the lever shaft 132, and the pivot shaft 140 fits into a through-hole in a holder 142 arranged in the middle portion along the longitudinal direction of the lever shaft 132. Thus, the lever shaft 132 is able to pivot around the pivot shaft 140.

One side surface of the case member 190 (right side in FIG. 2) has an opening, and one end of the bellows 220 described above is hermetically held to the opening by the locking portion 222. The other end of the bellows 220 is hermetically coupled to an end portion 132b of the lever shaft 132 by the locking portion 224. The end portion 132b of the lever shaft 132 at the side to which the bellows 220 is attached is position-adjustably coupled to the arm 234 via a coupling tool 232.

A measuring element holder 236 that holds the measuring element 250 is attached at the distal end portion of the arm 234, opposite to where the arm 234 is coupled to the lever shaft 132. By adjusting a retaining screw 238 that is locked by the measuring element holder 236, a position of a contact 240 at the distal end portion of the measuring element 250 can be adjusted, in FIG. 2 in the vertical direction. In a case of axial runout measurement as illustrated in FIG. 1, the contact 240 is pressed downward, and the measurement is performed while the workpiece W is rotated.

The measuring force adjustment mechanism 300 that presses the contact 240 downward is substantially arranged at the center portion of the case member 190. As described in detail later, the measuring force adjustment mechanism 300 includes, as main components, a cap nut 320 that is disposed on the upper side, an upper spring locking tool that is in threaded engagement with the cap nut 320, a tension spring 146, and a lower spring locking tool 312.

In a case where the cap nut 320 is rotated in the tightening direction, an upper spring locking tool 160 that is in threaded engagement with the cap nut 320 is lifted upward, and the tension spring 146, one end of which is locked by the upper spring locking tool 160, is extended to lift the lever shaft 132. The lever shaft 132 rotates around the pivot shaft 140 and pushes the arm 234 coupled to the lever shaft 132 downward. The force that pushes the arm 234 downward is converted into a measuring force on the contact 240 at the position of the measuring element 250.

The retract mechanism 100 is arranged adjacent to the measuring force adjustment mechanism 300. The retract mechanism 100 includes a cavity-shaped cylinder 110 with a hole formed on a lower end portion of the cylinder 110, a piston 114 that is arranged to be movable in the vertical direction in the cylinder 110 and whose shaft extends from the hole in the lower end portion, and a coil spring 122 that is wound around the shaft of the piston 114.

Selectively directing high-pressure air from an air source (not illustrated) to the upper surface of the piston 114 enables the piston 114 to move in the vertical direction against the spring force of the coil spring 122. In a case where the piston 114 moves downward and the shaft thereof is brought into contact with the lever shaft 132, the lever shaft 132 rotates or pivots around the pivot shaft 140. As a result, the measuring element 250 attached to the distal end of the arm 234 coupled to the lever shaft 132 rotates upward, and the retracting of the measuring element 250 is executed.

In the vicinity of the end portion of the lever shaft 132 on an opposite-to-measuring-element side 132a, a displacement shaft 182 is attached perpendicular to the lever shaft 132, and a coil 184 is wound around the displacement shaft 182 in a surrounding manner to form the actuating transformer 180. Signals from the actuating transformer 180 are input to a terminal processing unit 186 and subjected to signal processing, followed by directing the processed signals to the control processing device 20 (see FIG. 1).

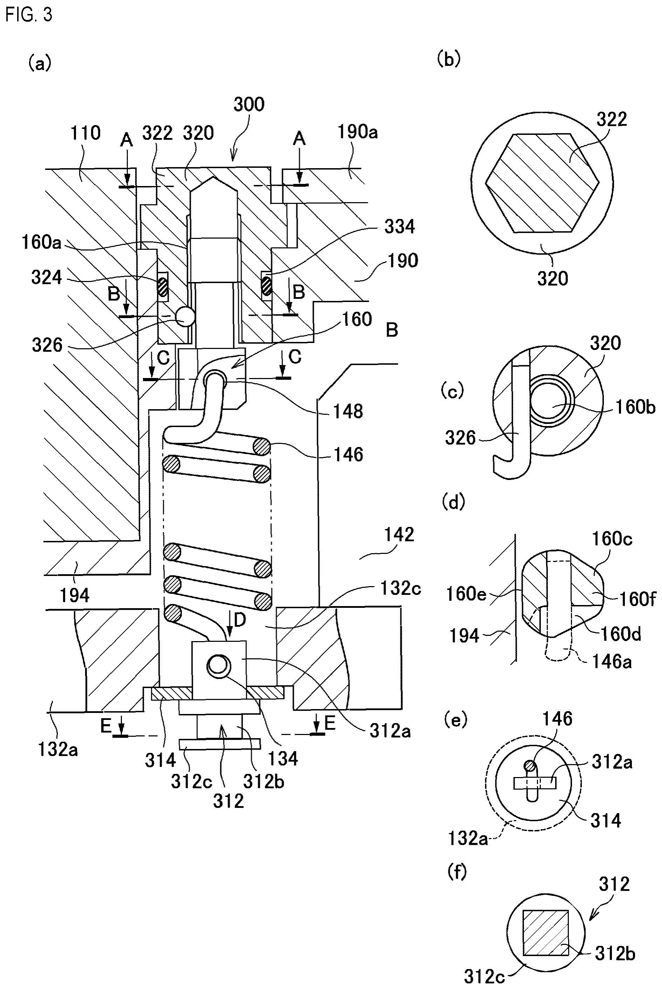

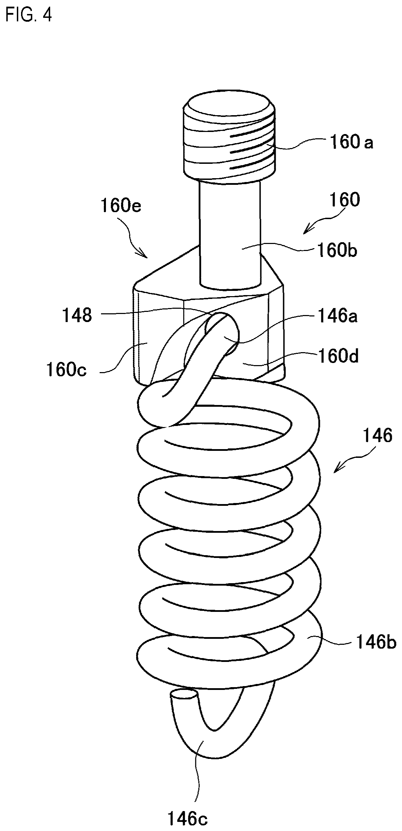

The above outlines the measuring device 60 using the cylinder 110 serving as a general single-axis pneumatic cylinder. Hereinbelow, the details of the measuring force adjustment mechanism 300 including the feature configuration of the present invention will be described with reference to FIGS. 3 to 5. FIG. 3(a) is a longitudinal cross-sectional view of the measuring force adjustment mechanism 300 included in the measuring device 60 illustrated in FIG. 2, and FIG. 3(b) to FIG. 3(f) illustrate a cross-sectional view taken along arrow A-A, a cross-sectional view taken along arrow B-B, a cross-sectional view taken along arrow C-C, a view in the direction of arrow D, and a cross-sectional view taken along arrow E-E in FIG. 3(a), respectively. FIG. 4 is a perspective view illustrating a state in which an upper engagement portion 146a of the tension spring 146 is locked by the upper spring locking tool 160 included in the measuring force adjustment mechanism 300. The tension spring 146 includes, in addition to the upper engagement portion 146a, a tension spring portion 146b and a lower engagement portion 146c.

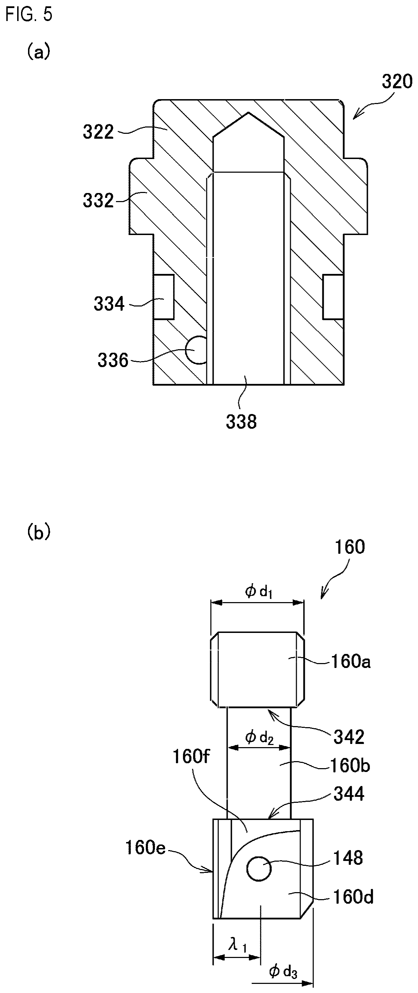

FIG. 5(a) is a longitudinal cross-sectional view of the cap nut 320 included in the measuring force adjustment mechanism 300, and FIG. 5(b) is a front view of the upper spring locking tool 160.

In the measuring force adjustment mechanism 300, the cap nut 320 positioned at the uppermost portion (exposed portion, upper outer surface) has an upper end portion exposed to the outside of the measuring device 60 and is substantially cylindrical, as illustrated in FIG. 5(a). An area in the vicinity of the upper end portion is hexagonally shaped, similar to the head of a hexagonal bolt (see FIG. 3(b)). By engaging a tool such as a spanner with this hexagonal tool locking portion 322, the cap nut 320 can be rotated from outside the measuring device 60. A stopper portion 332 with a larger diameter than those of the other portions is formed below the hexagonal tool locking portion 322, the stopper portion 332 serving as a stopper portion when the measuring force adjustment mechanism 300 is assembled into the measuring device 60. In other words, when the measuring force adjustment mechanism 300 is assembled into the measuring device 60, the cap nut 320 is restricted from moving downward by bring the lower end surface of the stopper portion 332 into contact with the upper surface of the retract mechanism holding member 194 and the upper surface of a stepped portion of the case member main body 190f.

The lower side of the stopper portion 332 is cylindrical and has a sealed groove 334 whose outer surface is provided with a sealing member such as an O-ring. As described above, since the inside of the measuring device 60 is filled with a fluid, sealing is performed with an O-ring or the like to minimize leakage of the fluid to the outside. A thread hole 338 is formed from the center portion of the lower surface of the cap nut 320 upward. A threaded portion 160a that is a male thread of the upper spring locking tool 160 is engaged with the thread hole 338. In the portion of the cap nut 320 where the thread hole 338 is formed and at the middle height in the vertical direction, a pin hole 336 that is close to the thread hole 338 and extends in the direction perpendicular to the shaft is formed.

The upper spring locking tool 160 includes the threaded portion 160a, a small diameter portion 160b, and a spring locking portion 160f, in order in the vertical direction, as illustrated in the front view in FIG. 5(b). A thread that can be threaded into the thread hole 338 of the cap nut 320 is formed on the uppermost threaded portion 160a. The threaded portion 160a has an outer diameter φd1. The small diameter portion 160b is formed directly below the threaded portion 160a and has an outer diameter of φd2 smaller than the outer diameter φd1 of the threaded portion 160a.

The lowermost spring locking portion 160f is a portion where a spring engagement hole 148 is formed in the center portion to lock the upper end portion of the tension spring 146. The spring engagement hole 148 passes through the upper spring locking tool 160 in a direction perpendicular to the axial direction. Here, the spring locking portion 160f is required to lock the upper end portion of the tension spring 146 and to prevent the entire upper spring locking tool 160 from rotating around the shaft together with the rotation of the cap nut 320 so as to minimize a torsional torque from being applied to the tension spring 146 locked by the spring engagement hole 148 or to prevent the tension spring 146 from rotating around the shaft, and is required to have an anti-rotation function.

In the present embodiment, the shape of the spring locking portion 160f is defined as follows. In a cylinder having an outer diameter φd3 that is greater than the outer diameter φd1 of the threaded portion 160a, at least one portion of the side surface is cut off or trimmed to form trimmed surfaces 160c and 160e to form the cross section in a rounded triangular shape (see FIG. 3(d)). In this case, the outer diameter portion of φd2 is left at least partially in the circumferential direction, or a portion having a radial length greater than the radius (= φd1/2) of the threaded portion 160a is formed in part in the circumferential direction.

In a case where a plurality of the trimmed surfaces 160c are produced, one of the trimmed surfaces faces a side surface of the retract mechanism holding member 194 arranged adjacent to the measuring force adjustment mechanism 300. Here, the distance between the retract mechanism holding member 194 and the axial center of the upper spring locking tool 160 is set as follows. The distance is substantially equal to a distance λ1 (see FIG. 5(b)) from the axial center to the trimmed surfaces 160c and 160e in the spring locking portion 160f, and is strictly set greater than λ by a gap that allows the spring locking portion 160f to move in the vertical direction. In other words, the gap is large enough to allow the upper spring locking tool 160 to move in the vertical direction while the trimmed surface 160e faces the side surface of the retract mechanism holding member 194.

When the cap nut 320 is rotated to move the upper spring locking tool 160 in the vertical direction, the trimmed surface 160e facing the side surface of the retract mechanism holding member 194 diagonally faces and is brought into contact with the side surface of the retract mechanism holding member 194, even though the upper spring locking tool 160 is rotated together with the cap nut 320. Since the trimmed surface 160e is brought into contact with the side surface of the retract mechanism holding member 194, the rotation of the upper spring locking tool 160 is restricted, whereas the cap nut 320 remains rotatable. As a result, since the upper spring locking tool 160 moves in the vertical direction without rotating, the spring locking portion 160f constitutes, in cooperation with the retract mechanism holding member 194, means configured to prevent the rotation (rotation restriction) of the upper spring locking tool 160.

In the spring locking portion 160f of the upper spring locking tool 160, a flat surface 160d is formed by cutting off a portion around the spring engagement hole 148. The flat surface 160d is provided to facilitate insertion of the upper end portion of the tension spring 146 into the spring engagement hole 148 (see FIG. 3(d)).

As illustrated in FIG. 3(c), a pin 326 can be inserted into the pin hole 336 of the cap nut 320. The pin 326 is positioned in the small diameter portion 160b of the upper spring locking tool 160 in the vertical direction. The pin hole 336 is positioned at a position radially away from the axis of the cap nut 320 by a distance equal to or greater than the axial radius of the small diameter portion 160b, and shorter than the outer radius of the threaded portion 160a. In a case where a pin extending in a direction substantially perpendicular to the axial direction is inserted into the pin hole 336, the pin acts as a stopper to prevent the upper spring locking tool 160 from being displaced excessively in the downward direction. In other words, the pin 326 is configured to contact or not contact the small diameter portion 160b so as not to interfere with the vertical movement of the small diameter portion 160b, while contacting a lower stopper surface 342 and an upper spring stopper surface 344, that is, a position and size are adjusted so that at least the threaded portion 160a does not move downward to pass the pin 326.

When moving vertically together with the rotation of the cap nut 320, the upper spring locking tool 160 can move in the vertical direction while the small diameter portion 160b is in the position of the pin 326. However, in a case where the lower end surface of the threaded portion 160a moves downward to the position of the pin 326, the pin 326 and the lower stopper surface 342 of the threaded portion 160a interfere with each other, and the upper spring locking tool 160 cannot be displaced any further downward.

On the other hand, in a case where the upper spring locking tool 160 is lifted upward by the rotation of the cap nut 320, the upper spring locking tool 160 can move upward until the upper spring stopper surface 344 that is the upper end surface of the spring locking portion 160f is brought into contact with the lower end surface of the cap nut 320. However, in a case where the upper spring stopper surface 344 is brought into contact with the lower end surface of the cap nut 320, the upper spring locking tool 160 cannot move upward any further. In other words, the lower end surface of the cap nut 320 and the upper end surface of the spring locking portion 160f constitute a stopper that prevents the upper spring locking tool 160 from moving upward.

The tension spring 146 is a general coil spring, one end portion is locked by the spring engagement hole 148 formed in the upper spring locking tool 160, and the other end portion is locked by a spring locking hole 134 formed in the lower spring locking tool 312. The lower spring locking tool 312 is secured by the spring force of the tension spring 146 to a base 314 that is fitted into a stepped hole 132c formed in the opposite-to-measuring-element side 132a of the lever shaft 132.

In other words, the upper portion of the lower spring locking tool 312 is flat-shaped with a rectangular cross section (flat portion having a rectangular cross section) and is formed as an engagement portion 312a. On the other hand, a rectangular groove corresponding to the cross-sectional shape of the engagement portion 312a of the lower spring locking tool 312 is formed in the center portion of the circular base 314. The engagement portion 312a of the lower spring locking tool 312 is engaged with the rectangular groove to allow the engagement portion 312a to protrude upward (see FIG. 3(a) and FIG. 3(e)), the tension spring locked by the spring engagement hole 148 lifts the base 314 upward. Since the base 314 is prevented from moving upward by the stepped hole 132c in the lever shaft 132, the lower spring locking tool 312 is secured to the base 314.

Even though the cap nut 320 is rotated, the upper spring locking tool 160 does not rotate due to the rotation preventing configuration as described above, so that the lower spring locking tool 312 also does not rotate. As a result, it is possible to minimize a torsional torque applied to the tension spring 146 arranged between the upper spring locking tool 160 and the lower spring locking tool 312. A wrench locking portion 312b that can engage with a wrench as a tool is formed on the lower portion of the lower spring locking tool 312, and in the present embodiment, formed in a square shape. A flange 312c is formed on the lower portion of the wrench locking portion 312b (see FIG. 3(f)) to minimize slipping off of the wrench. This wrench locking portion 312b is used when the orientation of the tension spring 146 is adjusted.

As described above, the measuring device described in the present embodiment is necessary to include: (1) being compact; (2) adjustability of the measuring force from the outside; (3) no application of torsional torque to the tension spring; and (4) minimization of leakage of a fluid such as silicone oil with which the measuring device is filled, to the outside. Therefore, in the present embodiment, the upper spring locking tool with which one end of the tension spring is engaged is provided with the rotation preventing configuration to secure the position and orientation of the lower spring locking tool. The configuration in which the male thread portion is formed on the end portion of the upper spring locking tool, and the cap nut including a female thread that engages with this male thread is used to seal the outer peripheral surface of the cap nut. As a result, the generation of an excess torsional torque is minimized in the tension spring. Furthermore, it is possible to minimize an increase in the pivoting force of the lever due to the changes in the orientation of the spring. Furthermore, since the sealing and spring force can be changed with a simple configuration, the measuring force adjustment mechanism arranged in the measuring device can be miniaturized, contributing to the miniaturization of the measuring device. In addition, since the structure is simple, and the tension spring as the main port product only deforms in the extending and retracting direction, no excess torsional torque is applied, which improves the reliability of the measuring device.

In the above-described embodiment, the part exposed to the outside of the measuring device is the cap nut; however, even though a bolt is used as the part exposed to the outside and a cap nut is formed on the upper spring locking tool, a structure in which no torsional torque is applied to the tension spring can also be achieved similarly. However, the structure in which the cap nut is exposed to the outside is more easily miniaturized. It goes without saying that the shape of the spring locking portion of the upper spring locking tool is not limited to that described in the present embodiment, and may also be square, pentagonal, or hexagonal in cross section, or a shape with a notch on one side of a circle. It may also be a driver groove. In any case, it is sufficient that the structure is able to prevent rotation by being brought into contact with the adjacent retract mechanism holding member.

It is desirable to provide the removable lid member 190d in close proximity to the cap nut to prevent unforeseen rotation of the cap nut. Accordingly, engagement of the wrench with the bolt head on the upper surface of the cap nut can be prevented.

### Reference Signs List

20 Control processing device
30 Measuring table
60 (Dimension) Measuring device
100 Retract mechanism
110 Cylinder
114 Piston
122 Coil spring
130 Pivoting means
132 Lever shaft
132a Opposite-to-measuring-element side
132b (Side) End portion
134 Spring locking hole
140 Pivot shaft
142 Holder
146 Tension spring
146a Upper engagement portion
146b (Tensile) Spring portion
146c Lower engagement portion
148 Spring engagement hole
160 Upper spring locking tool
160a (Male) Threaded portion
160b Small diameter portion
160c Trimmed surface
160d Flat surface
160e Trimmed surface
160f Spring locking portion
180 Actuating transformer
182 Displacement shaft
184 Coil
186 Terminal processing unit
190 Case member
190a Side member
190b Bottom plate
190c Sealing member
190d Lid member
190f Case member main body
194 Retract mechanism holding member
220 Bellows
222, 224 Locking portion
232 Coupling tool
234 Arm
236 Measuring element holder
238 Retaining screw
240 Contact
250 Measuring element
300 Measuring force adjustment mechanism
312 Lower spring locking tool
312a Engagement portion
312b Wrench locking portion
312c Flange
314 Base
320 Cap nut
322 Tool locking portion
324 Sealing member (O-ring)
326 Pin
332 Stopper portion
334 Sealed groove
336 Pin hole
338 Thread hole (for upper spring locking tool)
342 Lower stopper surface
344 Upper spring stopper surface
W Workpiece

## Claims

1. A measuring force adjustment mechanism included in a measuring device with which a fluid is filled and sealed, the measuring force adjustment mechanism comprising:
a spring;
an upper spring locking tool that locks one end of the spring; and
a lower spring locking tool that locks an opposite end of the spring to the one end, wherein
a thread is formed on an opposite end to a side of the upper spring locking tool where the spring is locked,
a cap nut that includes a threaded portion on which a thread is formed to engage with the thread is provided, an opposite end side to the threaded portion of the cap nut being exposed to an outside of the measuring device,
the cap nut includes a tool locking portion where the exposed portion is capable of engaging with a tool and includes a sealed groove on a side surface of the cap nut, and
a rotation restriction means is formed in the upper spring locking tool, the rotation restriction means being configured to be movable in a vertical direction without rotating around its own axis even though the cap nut rotates.

2. The measuring force adjustment mechanism according to claim 1, wherein the tool locking portion is a bolt head or a driver groove formed on an upper outer surface of the cap nut.

3. The measuring force adjustment mechanism according to claim 2, wherein
the upper spring locking tool includes, from top to bottom in an axial direction, the threaded portion and a small diameter portion, and
a hole is formed at a height position where the thread of the cap nut is formed, and at a position radially away from the axis of the cap nut by a distance equal to or greater than an axial radius of the small diameter portion of the upper spring locking tool and shorter than an outer radius of the threaded portion of the upper spring locking tool, the hole extending in a direction substantially perpendicular to the axial direction, through which a pin is capable of being inserted.

4. The measuring force adjustment mechanism according to claim 1, wherein the upper spring locking tool includes a trimmed surface having a cross section perpendicular to the axis, with part of a circle cut off, and the trimmed surface constitutes the rotation restriction means.

5. The measuring force adjustment mechanism according to claim 1, wherein the lower spring locking tool includes a spring locking portion that is a flat portion having a rectangular cross section and has a base including a groove into which the flat portion is fitted.

6. A measuring device comprising:
an arm that has one end to which a measuring element attached;
a lever that is coupled to the arm;
a sealed case that houses the lever liquid-tightly;
a retract mechanism that is disposed in the sealed case;
a measuring force adjustment mechanism that is arranged adjacent to the retract mechanism and in the sealed case; and
an actuating transformer that is arranged in the sealed case and arranged on an opposite side of the measuring force adjustment mechanism with respect to the retract mechanism, wherein
the measuring device measures an object to be measured, serving as a workpiece, by bring the measuring element into contact with the object to be measured,
the measuring force adjustment mechanism includes a tension spring, an upper spring locking tool and a lower spring locking tool that lock both ends of the tension spring, respectively, and a cap nut that is positioned on an upper portion of the upper spring locking tool and has a thread formed therein,
the upper spring locking tool includes, on an opposite end to the end where the tension spring is locked, a thread engaging with the thread formed on the cap nut,
the cap nut includes a portion that is exposed to an outside of the measuring device on an opposite end side to an opening end at which the thread is formed, the exposed portion of the cap nut including a tool locking portion with which a tool is capable of being engaged, and a sealed groove is formed on a side surface of the cap nut, and
the upper spring locking tool is, in cooperation with an outer surface of the retract mechanism, movable in a vertical direction without rotating around its own axis even though the cap nut rotates.

7. The measuring device according to claim 6, wherein
the upper spring locking tool includes, from top to bottom in an axial direction, a threaded portion, a small diameter portion, and a spring locking portion, and
a hole, through which a pin is capable of being inserted, is formed in the cap nut to extend in a direction perpendicular to the axial direction, wherein a position of the hole in the axial direction is in a threaded portion formed in the cap nut, and a position of the hole in a radial direction is a position away from an axial center of the cap nut by a distance equal to or greater than an axial radius of the small diameter portion of the upper spring locking tool and shorter than an outer radius of the threaded portion of the upper spring locking tool.
